# EUROPÄISCHE PATENTSCHRIFT

(11) **EP 3 412 458 B1**
(45) Veröffentlichungstag und Bekanntmachung des Hinweises auf die Patenterteilung: **22.07.2020**
(21) Anmeldenummer: 18172115.0
(22) Anmeldetag: 14.05.2018
(51) Int. Cl.: B32B 39/00, B32B 37/08, B32B 37/06, B30B 15/04

(54) **VERFAHREN UND LAMINIERVORRICHTUNG ZUM LAMINIEREN EINES AUS MEHREREN SUBSTRATSCHICHTEN BESTEHENDEN STAPELS ZU EINEM VERBUNDKÖRPER**
METHOD AND LAMINATING APPARATUS FOR LAMINATING A STACK CONSISTING OF SEVERAL SUBSTRATE LAYERS TO FORM A COMPOSITE BODY
PROCÉDÉ ET DISPOSITIF DE LAMINAGE PERMETTANT DE LAMINER UN EMPILEMENT DE PLUSIEURS COUCHES DE SUBSTRAT POUR FORMER UN CORPS COMPOSITE

(30) Priorität: 07.06.2017 DE 102017112509
(43) Veröffentlichungstag der Anmeldung: 12.12.2018
(73) Patentinhaber: Bundesdruckerei GmbH, 10969 Berlin (DE)
(72) Erfinder: Gümmer, Andreas, 27308 Hohenaverbergen (DE); Frost, Dietmar, 31785 Hameln (DE); Fano Landa, Luis Felipe, 28357 Bremen (DE)
(74) Vertreter: Mammel und Maser

(56) Entgegenhaltungen:
- DE-A1-102009 014 249
- DE-A1-102015 205 539

## Beschreibung

Die Erfindung betrifft ein Verfahren sowie eine Laminiervorrichtung zum Laminieren eines aus mehreren Substratschichten bestehenden Stapels zu einem Verbundkörper, insbesondere Dokumentenkörper, wie beispielsweise einem Sicherheitsdokument.

Aus der DE 10 2009 014 249 A1 ist eine Vorrichtung und ein Verfahren zum Herstellen einer mehrschichtigen thermoplastischen laminierten Folienanordnung bekannt. Diese Folienanordnung wird mit einem Heizblock oder einer Heizplatte aufgeheizt und laminiert. Gleichzeitig werden benachbart dazu, das in einem vorherigen Arbeitsschritt hergestellte Laminat mit einem Kühlblock gekühlt. In einem darauffolgenden Arbeitsschritt können die Heizblöcke und die Kühlblöcke abgehoben und auseinandergefahren werden. Der Kühlblock wird zwischen die beiden Heizblöcke verfahren, um darauffolgend eine Kühlung vorzunehmen. Nachfolgend können die Kühlblöcke wieder in eine weitere Position verfahren werden, so dass darauffolgend benachbart dazu wieder eine Aufheizung des Laminats durch die Heizblöcke erfolgt.

Aus der DE 10 2015 205 539 A1 ist ein Verfahren und eine Vorrichtung zum Laminieren eines mehrschichtigen Sicherheitsdokumentenkörpers bekannt, bei welchem eine thermische Presse mit mindestens einem beweglichen Stempel eingesetzt wird. Diese thermische Presse umfasst einen oberen bewegbaren Stempel und einen unteren unbewegbaren Stempel. Dem jeweiligen Stempel zugeordnet ist jeweils ein Presspolster. An diesem anliegend ist jeweils ein Laminierblech vorgesehen. Zwischen den Laminierblechen ist ein Stapel von Substratschichten vorgesehen, welcher durch die thermische Presse laminiert wird. Zur Erhöhung der Stückzahl bei der Produktion von solchen Verbundkörpern, insbesondere Dokumentkörper, ist vorgesehen, dass mehrere thermische Pressen in Reihe hintereinander in Betrieb genommen werden, um in einem mehrstufigen Kurztakt zu arbeiten. Beispielsweise sind zwei aufeinanderfolgende Heizpressen und zwei aufeinanderfolgende Kühlpressen vorgesehen. In der ersten Heizpresse wird beispielsweise das Laminierblech, das Presspolster und der Stapel vorgewärmt. In der zweiten Heizpresse wird der Stapel auf eine Laminiertemperatur aufgeheizt, so dass die einzelnen Schichten miteinander laminiert werden. In der ersten darauffolgenden Kühlpresse wird der Stapel in einer ersten Stufe gekühlt und darauffolgend in der zweiten Kühlpresse vollständig abgekühlt.

Des Weiteren wird vorgeschlagen, dass der vorbeschriebene mehrstufige Prozess auch als ein zweistufiger Prozess ausgebildet sein kann, nämlich dahingehend, dass eine Heizpresse und eine Kühlpresse vorgesehen ist.

Bei diesem Verfahren werden die Presspolster, die Laminierbleche und der dazwischen angeordnete Stapel von Presse zu Presse transportiert. Dies ist zeitaufwändig. Darüber hinaus ist ein hoher Platzbedarf aufgrund der Vielzahl der Heiz- und Kühlpressen erforderlich.

Der Erfindung liegt die Aufgabe zugrunde, eine Laminiervorrichtung sowie ein Verfahren zum Laminieren eines aus mehreren Substratschichten bestehenden Stapels zu einem Verbundkörper zu schaffen, bei welchem die Laminationszeit reduziert wird.

Diese Aufgabe wird durch eine Laminationsvorrichtung zum Laminieren eines aus mehreren Substratschichten bestehenden Stapels zu einem Verbundkörper, insbesondere Dokumentenkörper, gelöst, bei der ein Niederhalter vorgesehen ist, der einen Stapel zum Pressentisch in der Lage fixiert anordnet und bei der zum in der Laminierposition fixierten Niederhalter aufeinanderfolgend eine Heizeinrichtung und eine Kühleinrichtung positionierbar ist. Diese Laminiervorrichtung weist den Vorteil auf, dass während der Heizphase zur Aufheizung des Stapels auf eine Laminiertemperatur und während der Kühlphase, bei welcher der Stapel aus der Laminiertemperatur abgekühlt wird, der Stempel durch den Niederhalter in seiner Position innerhalb der Laminiervorrichtung fixiert bleibt. Dadurch ist ein Wechseln des Stapels von einer Heizpresse in eine Kühlpresse nicht erforderlich, wodurch eine Verkürzung der Laminationszeit erzielt wird. Darüber hinaus kann durch die Ausgestaltung der Laminiervorrichtung, welche eine Heizeinrichtung und eine Kühleinrichtung umfasst, die aufeinanderfolgend zum Stapel positionierbar sind, eine Platzeinsparung erzielt werden, da keine zusätzliche Presse erforderlich ist. Durch die wahlweise Anordnung der Heizeinrichtung und Kühleinrichtung zum Niederhalter kann des Weiteren auch eine Verkürzung der Laminationszeit erzielt werden, da die aufzuheizenden und abzukühlenden Massen ausschließlich durch den Niederhalter und das Laminationsblech bestimmt sind und keine weiteren Massen aufgeheizt oder abgekühlt werden müssen.

Des Weiteren ist bevorzugt vorgesehen, dass an dem Grundkörper eine Führungseinrichtung vorgesehen ist, durch welche die Heizeinrichtung und Kühleinrichtung abwechselnd aus einer Ruheposition in eine Arbeitsposition überführbar sind. Durch eine einfache Verfahrbewegung der Heiz- und Kühleinrichtung entlang der Führungseinrichtung können die Heiz- und Kühleinrichtung außerhalb einer Arbeitsposition in der Laminationsvorrichtung positioniert werden, um ein schnelles Be- und Entladen des Stapels zu ermöglichen. Darauffolgend kann ein schneller Wechsel zwischen der Heiz- und Kühlvorrichtung durch eine einfache Verfahrbewegung zum Niederhalter erfolgen, wodurch die Prozesszeiten reduziert werden können.

Bevorzugt ist vorgesehen, dass die Heizeinrichtung und die Kühleinrichtung jeweils eine Auflagefläche aufweisen, welche in der Arbeitsposition zur Anlage an dem Niederhalter überführbar ist. Dadurch kann eine vollflächige Kontaktierung und maximale Energieübertragung erzielt werden.

Vorteilhafterweise weist die Heiz- und Kühleinrichtung jeweils der Auflagefläche gegenüberliegend eine Druckfläche auf, an welcher ein Pressenstempel oder eine Druckplatte eines beweglichen Stempels positionierbar ist. Dies ermöglicht, dass nach dem Positionieren der Heizeinrichtung oder Kühleinrichtung in der Arbeitsposition die Heiz- oder Kühleinrichtung über den Pressenstempel auf den Niederhalter zu bewegt wird, so dass eine vollflächige Kontaktierung erfolgt. Darüber hinaus kann diese Kraft des Pressenstempels über die Heiz- oder Kühleinrichtung, den Niederhalter und das Laminierblech auf den Stapel übertragen werden, um die Lamination unter Druck und Temperatur durchzuführen.

Die Führungseinrichtung zur verfahrbaren Aufnahme der Heiz- und Kühleinrichtung ist bevorzugt an dem Grundkörper mittels einer Federlagerung befestigt. Dadurch ist ermöglicht, dass bei dem Ausüben einer Presskraft mittels des Pressstempels auf die Heiz- oder Kühleinrichtung eine Verfahrbewegung auf den Stapel zu gerichtet ermöglicht ist. Während dem Wechsel zwischen der Heiz- und Kühleinrichtung kann die Führungseinrichtung die Heiz- und Kühleinrichtung geringfügig gegenüber dem Niederhalter abheben, so dass eine freie Verfahrbewegung ermöglicht wird, bevor darauffolgend die Kühl- oder Heizeinrichtung zum Niederhalter wieder niedergedrückt wird.

Die Heiz- und Kühleinrichtung sind bevorzugt als eine verfahrbare Einheit ausgebildet, die insbesondere thermisch zueinander getrennt sind. Dies vereinfacht die Ansteuerung der Laminiervorrichtung zum Heizen und Kühlen des Stapels. Durch die thermische Trennung mit einem Isoliermaterial zwischen der Kühl- und Heizeinrichtung ist eine gegenseitige thermische Beeinträchtigung verhindert. Die Heiz- als auch Kühleinrichtung können gleichzeitig auf Betriebstemperatur bereitgestellt sein.

Der Niederhalter kann als Laminierblech ausgebildet sein. Alternativ kann an dem Niederhalter auch das Laminierblech, vorzugsweise auswechselbar, befestigt sein.

Auf dem Pressentisch kann bevorzugt ein Werkstückträger positionierbar sein, der von einer Transportvorrichtung zur Laminiervorrichtung zum Laminieren des Stapels überführbar ist und nach dem Laminieren wieder zur Transportvorrichtung zurückführbar ist. Dadurch kann eine solche Laminiervorrichtung in eine Prozessautomation eingebunden werden, bei welcher der Werkstückträger den Stapel von Substratschichten oder den Verbundkörper von Station zu Station transportiert.

Der Grundkörper der Laminiervorrichtung weist bevorzugt einen C-förmigen Maschinenrahmen auf, welcher an einem oberen Schenkel den Pressenstempel und an einem unteren Schenkel den Pressentisch aufnimmt. Diese C-förmigen Maschinenrahmen weisen den Vorteil auf, dass eine gute Zugänglichkeit zum Pressentisch gegeben ist.

Des Weiteren ist bevorzugt vorgesehen, dass seitlich zum Grundkörper der Niederhalter positioniert ist, der mit einer Verfahreinrichtung aus einer Freigabeposition in eine Halteposition überführbar ist. Die unabhängige Ansteuerung des Niederhalters zur Kühl- und Heizeinrichtung weist den Vorteil auf, dass bei einem Wechsel zwischen der Heiz- und Kühleinrichtung der laminierte Stapel in seiner Lage durch den Niederhalter fixiert gehalten bleibt. Dadurch kann die Qualität zur Herstellung des Verbundkörpers erhöht sein.

Die der Erfindung zugrundeliegende Aufgabe wird des Weiteren durch ein Verfahren zum Laminieren eines aus mehreren Substratschichten bestehenden Stapels zu einem Verbundkörper gelöst, bei dem ein Stapel aus mehreren Substratschichten in eine Vorrichtung, insbesondere in eine Laminiervorrichtung nach einem der vorhergehenden Ausführungsformen, auf dem Pressentisch in einer Arbeitsposition positioniert wird, bei dem ein Niederhalter in eine Halteposition übergeführt und der Stapel fixiert wird, bei dem zum Aufheizen und Laminieren eine Heizeinrichtung zum Niederhalter verfahren wird, bei dem ein beweglicher Stempel die Heizeinrichtung auf den Niederhalter drückt, wodurch Wärme und Druck in den Stapel eingeleitet werden, bei dem der Stapel nach dem Laminieren durch den Niederhalter fixiert gehalten wird und bei dem die Heizeinrichtung in eine Ruheposition und die Kühleinrichtung in die Arbeitsposition übergeführt wird und bei dem die Kühleinrichtung durch den beweglichen Stempel auf den Niederhalter gedrückt wird.

Dieses Verfahren ermöglicht, dass innerhalb einer Laminiervorrichtung ein Aufheizen des Stapels auf Laminiertemperatur und ein abschließendes Abkühlen des Stapels ermöglicht wird, wobei während dem Laminieren und Kühlen sowie während dem Wechsel zwischen der Kühleinrichtung und der Heizeinrichtung der Stapel durch den Niederhalter in einer definierten Lage zum Pressentisch gehalten wird. Dadurch kann die Prozesszeit verringert werden. Auch kann die Energie für das Aufheizen und Abkühlen des Stapels reduziert werden, da lediglich der Niederhalter und das Laminierblech als thermische Masse wirken.

Nach einer bevorzugten Ausgestaltung des Verfahrens ist vorgesehen, dass der Niederhalter mit einer voreingestellten Kraft auf den Stapel drückt. Durch diese Vorfixierung wird ermöglicht, dass die einzelnen Substratschichten bereits vor dem Beginn der Heizphase vollflächig aneinander liegen, wodurch eine Verkürzung der Aufheizphase erzielt werden kann.

Des Weiteren ist bevorzugt vorgesehen, dass die Heiz- und Kühleinrichtung beim Betrieb der Laminiervorrichtung auch in der Ruheposition jeweils eine Arbeitstemperatur aufweisen. Dies bedeutet, dass die Heizeinrichtung auch benachbart zur Arbeitsposition, also in der Ruheposition, auf die Laminiertemperatur aufgeheizt ist und die Kühleinrichtung auf die dafür vorgesehene Kühltemperatur, so dass unmittelbar nach dem Positionieren der Kühl- oder Heizeinrichtung in der Arbeitsposition der jeweilige Prozess sofort durchgeführt werden kann.

Des Weiteren ist bevorzugt vorgesehen, dass während dem Laminieren des Stapels die Temperatur mit zumindest einem Temperatursensor, die Höhe des Stapels mit einem Abstandssensor, die Druckkraft auf den Stapel mit einem Kraftsensor und/oder die Laminations- und Kühldauer mit einem Zeitmesser überwacht wird. Dadurch kann eine Prozessüberwachung erzielt werden, um gleichzeitig festzustellen, ob der hergestellte Verbundkörper ein Gutteil oder ein Ausschussteil darstellt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Seitenansicht der Laminiervorrichtung,
Figur 2 eine schematische Ansicht von vorne auf die Laminiervorrichtung gemäß Figur 1,
Figur 3 eine perspektivische Schnittansicht entlang der Linie II-II in Figur 3,
Figur 4 eine perspektivische Ansicht auf einen Werkstückträger mit einem Stapel von Substratschichten,
Figur 5 eine schematische Seitenansicht der Laminiervorrichtung gemäß Figur 1 in einer ersten Arbeitsposition und
Figur 6 eine schematische Seitenansicht der Laminiervorrichtung gemäß Figur 1 in einer zweiten Arbeitsposition.

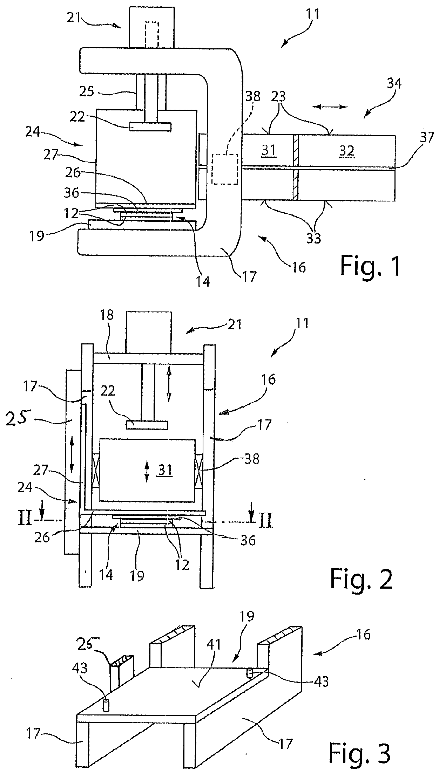

In Figur 1 ist eine schematische Seitenansicht einer erfindungsgemäßen Laminiervorrichtung 11 dargestellt. Die Figur 2 zeigt eine schematische Ansicht von vorne auf die Laminiervorrichtung 11 gemäß Figur 1. Diese Laminiervorrichtung 11 ist zum Laminieren eines aus mehreren Substratschichten 12 bestehenden Stapels 14 zu einem Verbundkörper vorgesehen. Dieser Verbundkörper kann als ein Dokumentenkörper, insbesondere als ein Sicherheitsdokument oder Wertdokument ausgebildet sein. Auch weitere Identifikationsdokumente oder Scheckkarten, Visa-Karten oder dergleichen können durch den Verbundkörper gebildet werden. Im Fall eines Sicherheitsdokumentenkörpers kann beispielsweise ein ID3-Dokument oder ein ID1-Dokument vorgesehen sein. Das ID1-Dokument kann beispielsweise aus 3 bis 15 Substratschichten bestehen und in einer Arbeitsposition, wie nachfolgend beschrieben sein wird, laminiert werden. Auch können Sicherheitsdokumente mit einem RFID-Chip oder andere elektronische Bauelemente, sogenannte Inlays, zwischen den Substratschichten oder innerhalb der Substratschichten vorgesehen sein, die nach dem Laminieren einen Verbundkörper bilden.

Als Substratschichten werden beispielsweise thermoplastische Schichten eingesetzt, insbesondere Polycarbonat. Weitere Materialien, die durch Druck und Temperatur mit einem weiteren Material laminiert werden können, finden ebenso Einsatz.

Die Laminiervorrichtung 11 umfasst einen Grundkörper 16, der beispielsweise als ein C-förmiger Maschinenrahmen 17 ausgebildet ist. Dieser C-förmige Maschinenrahmen 17 ist durch einen oberen Querträger 18 und einen unteren Pressentisch 19 auf Abstand zueinander angeordnet.

Am Grundkörper 16, insbesondere im oberen Querträger 18, ist ein beweglicher Stempel 21 vorgesehen, der relativ zum Pressentisch 19 aufund abbewegbar ist. Dieser bewegliche Stempel 21 umfasst eine Druckplatte 22, welche in der Höhe verfahrbar ansteuerbar ist. Seitlich zum C-förmigen Maschinenrahmen 17 ist ein Niederhalter 24 zugeordnet, der durch eine Verfahreinrichtung 25, die an dem C-förmigen Maschinenrahmen 17 befestigt ist, auf- und abbewegbar, also parallel zum beweglichen Stempel 21 auf- und abbewegbar. Dieser Niederhalter 24 ist beispielsweise L-förmig ausgebildet, so dass ein L-förmiger Schenkel 26 parallel zum Pressentisch 19 ausgerichtet ist und der zweite L-förmige Schenkel 27 an der Verfahreinrichtung 25 befestigt ist. Alternativ zum zweiten Schenkel 27 können auch Streben oder andere Befestigungsmöglichkeiten vorgesehen sein.

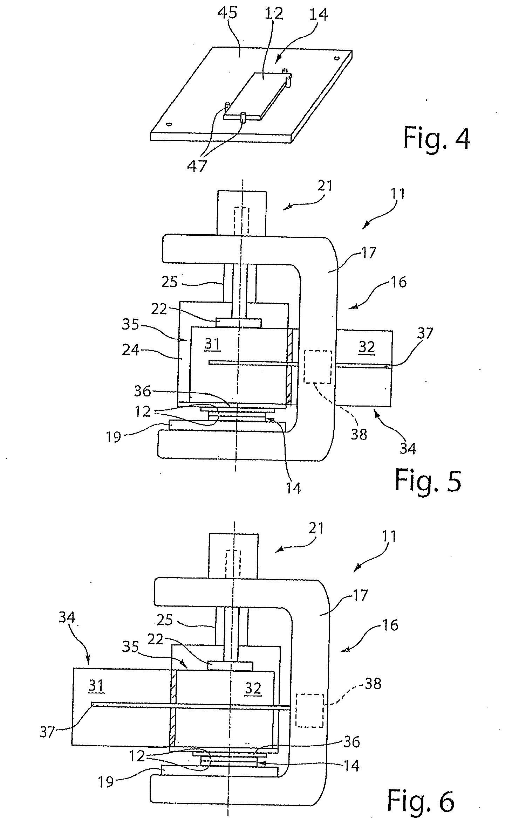

Der Grundkörper 16 nimmt des Weiteren eine Heizeinrichtung 31 und eine Kühleinrichtung 32 auf, die aus einer in Figur 1 dargestellten Ruheposition 34 wahlweise in eine in Figur 5 und Figur 6 dargestellte Arbeitsposition 35 überführbar sind. In dieser Arbeitsposition 35 sind die Heiz- oder Kühleinrichtung 31, 32 oberhalb des L-förmigen Schenkels 26 des Niederhalters 24 positioniert, so dass die Heiz- oder Kühltemperatur unmittelbar über den Niederhalter 24 auf den Stapel 14 einwirken kann.

Die Heiz- und Kühleinrichtungen 31, 32 sind beispielsweise als eine gemeinsame verfahrbare Einheit ausgebildet. Diese gemeinsame verfahrbare Einheit ist von einer Führungseinrichtung 37 getragen, welche vorzugsweise zwischen den beiden C-förmigen Maschinenrahmen 17 sich erstrecken. Bei der Führungseinrichtung 37 kann es sich beispielsweise um eine Linearführung handeln, durch welche eine Ein- und Ausfahrbewegung der Heiz- und/oder Kühleinrichtungen 31, 32 in und aus der Arbeitsposition 35 ansteuerbar ist. Die Führungseinrichtung 37 ist jeweils in Zustellrichtung des beweglichen Stempels 21 durch ein Lager 38 federnd nachgiebig gelagert. Insbesondere durch eine Federlagerung 38 wird ermöglicht, dass bei der Einbringung einer Presskraft über den beweglichen Stempel 21 beispielsweise auf die in der Arbeitsposition 35 positionierte Heizeinrichtung 31 eine Zustellbewegung der Heizeinrichtung 31 in Richtung auf den Niederhalter 24 möglich ist. Diese Presskraft wird dann über die an einer Druckfläche 23 der Heizeinrichtung 31 angreifenden Druckplatte 22 in die Heizeinrichtung 31 eingebracht. Von der Heizeinrichtung 31 wird die Druckkraft über eine Auflagefläche 33 der Heizeinrichtung 31 auf den Niederhalter 24 übertragen. Die eingeleitete Druckkraft und Temperatur wird über den Niederhalter 24 auf den Stapel 14 übergeführt. Analoges gilt bei der Positionierung der Kühleinrichtung 32 in der Arbeitsposition 35.

An einer Unterseite des Niederhalters 24, insbesondere des L-förmigen Schenkels 26, kann auswechselbar ein Laminierblech 36 vorgesehen sein. Durch ein solches Laminierblech 36 können Oberflächenstrukturen in die oberste Schicht des Stapels 14 eingebracht werden.

In Figur 3 ist eine schematische Schnittansicht entlang der Linie II-II in Figur 2 dargestellt. Eine perspektivische Ansicht auf den Pressentisch 19 zeigt, dass dieser eine plane Auflagefläche 41 aufweist. Zusätzlich kann zumindest ein Zentrierelement 43, insbesondere Fangstifte, in dem Pressentisch 19 vorgesehen sein. Diese dienen zur definierten Aufnahme und Ausrichtung eines Werkstückträgers 45. Dieser Werkstückträger 45 ist beispielsweise in Figur 4 dargestellt. Auf einem solchen Werkstückträger 45 können mehrere Substratschichten 12 unter Bildung eines Stapels 14 positioniert sein. Zur Ausrichtung der Schichten 12 zueinander und lagerichtigen Orientierung sind beispielsweise Zentrierstifte 47 an dem Werkstückträger 45 vorgesehen. Die Höhe der Zentrierstifte 47 ist an die Höhe des Stapels 14 nach dem Laminieren angepasst und gleich oder geringfügig geringer als die Höhe des Stapels 14 ausgebildet.

Ein solcher Werkstückträger 45 kann zu Beginn eines Laminierprozesses auf dem Pressentisch 19 positioniert und über die Zentrierelemente 43 lagerichtig aufgenommen werden. Der Werkstückträger 45 kann beispielsweise eine Komponente von einer Transportfördereinrichtung sein, welche mehrere Werkstückträger 45 gleichzeitig transportiert und wahlweise an einzelne Bearbeitungsstationen abgibt und anschließend wieder aufnimmt.

Nachfolgend wird ein Verfahren zum Laminieren eines aus mehreren Substratschichten 12 bestehenden Stapels 14 zu einem Verbundkörper unter Bezugnahme auf die Figuren 5 und 6 näher erörtert. Ein Werkstückträger 45 wird beispielsweise mittels einer Transportfördereinrichtung, die nicht näher dargestellt ist, der Laminiervorrichtung 11 zugeführt. Dies kann über eine Handhabungseinrichtung oder durch die Transportvorrichtung selbst erfolgen. Der Werkstückträger 45 mit den darauf aufgebrachten Substratschichten 12, die in einem Stapel 14 übereinanderliegen, wird auf dem Pressentisch 19 positioniert und über die Zentrierelemente 43 zum Pressentisch 19 ausgerichtet.

Anschließend wird der in einer Freigabeposition oder oberen Position angeordnete Niederhalter 24 auf den Stapel 12 zubewegt. Der Niederhalter 24 wird mit einer vorbestimmten Kraft in eine Halteposition übergeführt. In dieser Halteposition sind die Substratschichten 12 eng aufeinanderliegend bzw. zumindest geringfügig aufeinander gepresst positioniert und fixiert.

Darauf wird die Heizeinrichtung 31 aus der Ruheposition 34 in die Arbeitsposition 35 gemäß Figur 5 übergeführt. In der Ruheposition 34 ist die Heizeinrichtung 31 bereits auf eine Laminiertemperatur aufgeheizt. Die Heizeinrichtung 31 kann beispielsweise aus elektrisch aufheizbaren Heizpatronen entstehen.

In der Arbeitsposition 35 der Heizeinrichtung 31 wird der bewegliche Stempel 21 aktiviert, wodurch die Druckplatte 22 an der Druckfläche 23 auf der Heizeinrichtung 31 aufliegt und zur Anlage mit dem Niederhalter 24 übergeführt wird. Dabei wird der bewegliche Stempel 21 mit einem vorbestimmten Weg und einer vorbestimmten Druckkraft beaufschlagt.

Darauffolgend erfolgt ein Aufheizen und Laminieren der Substratschichten 12 zu einem Verbundkörper. Die Laminierung des Verbundkörpers wird durch Sensoren überwacht. Zum einen wird mittels eines Drucksensors eine Druckkraft überwacht, mit einem Abstandssensor ein Weg des Stempels 21 oder des Niederhalters 24, mit einem Temperatursensor die Laminiertemperatur und mit einem Zeitmesser die Laminierdauer überwacht. Alle Sensoren führen zu einer nicht näher dargestellten Steuerungseinrichtung, welche zur Ansteuerung der Laminiervorrichtung 11 dient.

Am Ende des Laminierzyklusses wird der bewegliche Stempel 21 wieder nach oben gefahren. Dementsprechend hebt die Heizeinrichtung 31 von dem Niederhalter 24 ab. Der Niederhalter 24 bleibt in der voreingestellten Position bzw. in Halteposition, welche sich nach dem Laminieren des Stapels einstellt.

Die abgehobene Heizeinrichtung 31 wird in die Ruheposition 34 und die Kühleinrichtung 32 in die Arbeitsposition 35 verfahren, wie dies gemäß Figur 6 dargestellt ist. Darauffolgend wird wiederum der bewegliche Stempel 21 aktiviert und drückt die Kühleinrichtung 32 vollflächig an den Niederhalter 24.

Die Kühleinrichtung 32 wird bevorzugt mit Kühlwasser gespeist. Alternativ kann auch ein öl- oder gelförmiges Medium vorgesehen sein.

Nach dem Kühlzyklus wird der bewegliche Stempel 21 abgehoben. Die Kühleinrichtung 32 hebt von dem Niederhalter 24 ab und wird gemeinsam mit der Heizeinrichtung 31 in die Ruheposition 34 gemäß Figur 1 verfahren. Darauffolgend wird der Niederhalter 24 angehoben. Der Verbundkörper kann von dem Werkstückträger 45 entnommen werden. Alternativ kann der Verbundkörper auf dem Werkstückträger 45 verbleiben und mittels der Transportvorrichtung zu einer weiteren Bearbeitungsstation verfahren werden oder einem Magazin zum Stapeln der Verbundkörper übergeführt werden.

### Bezugszeichenliste

**Tabelle 1**

| | |
|---|---|
| 11. Laminiervorrichtung | 27. L-förmiger Schenkel |
| 12. Substratschicht | 31. Heizeinrichtung |
| 14. Stapel | 32. Kühleinrichtung |
| 16. Grundkörper | 34. Ruheposition |
| 17. C-förmiger Maschinenrahmen | 35. Arbeitsposition |
| 18. Querträger | 36. Laminierblech |
| 19. Pressentisch | 37. Führungselement |
| 21. beweglicher Stempel | 38. Lager |
| 22. Druckplatte | 41. Auflagefläche |
| 23. Druckfläche | 43. Zentrierelement |
| 24. Niederhalter | 45. Werkstückträger |
| 25. Verfahreinrichtung | 47. Zentrierstift |
| 26. L-förmiger Schenkel | |

## Patentansprüche

1. Laminiervorrichtung zum Laminieren eines aus mehreren Substratschichten (12) bestehenden Stapels (14) zu einem Verbundkörper, insbesondere Dokumentenkörper, mit einem Grundkörper (16), an dem zumindest ein beweglicher Stempel (21) vorgesehen ist und mit zumindest einem Laminierblech (36), welches zwischen dem Stapel (14) und dem zumindest einen bewegbaren Stempel (21) angeordnet ist und mit einem Pressentisch (19), auf welchem der Stapel (14) in einer Laminierposition zur Bildung des Verbundkörpers anordenbar ist, **dadurch gekennzeichnet,**
- **dass** der Stapel (14) mit einem Niederhalter (24) zum Pressentisch (19) in der Laminierposition fixiert anordenbar ist und
- **dass** zum in der Laminierposition fixierten Niederhalter (24) aufeinanderfolgend eine Heizeinrichtung (31) und eine Kühleinrichtung (32) positionierbar ist.

2. Laminiervorrichtung nach Anspruch 1, **dadurch gekennzeichnet, dass** an dem Grundkörper (16) eine Führungseinrichtung (37) vorgesehen ist, durch welche die Heizeinrichtung (31) und die Kühleinrichtung (32) jeweils abwechselnd aus einer Ruheposition (34) in eine Arbeitsposition (35) zum Niederhalter (24) überführbar sind.

3. Laminiervorrichtung nach einem der vorhergehenden Ansprüche, **dadurch gekennzeichnet, dass** die Heizeinrichtung (31) und die Kühleinrichtung (32) eine Auflagefläche (33) aufweisen, welche in einer Arbeitsposition (35) zur Anlage an dem Niederhalter (24) überführbar ist.

4. Laminiervorrichtung nach einem der vorhergehenden Ansprüche, **dadurch gekennzeichnet, dass** die Heizeinrichtung (31) und die Kühleinrichtung (32) jeweils eine Druckfläche (23) aufweisen, die in Richtung auf den beweglichen Stempel (21) ausgerichtet sind, an welcher der zumindest eine bewegbare Stempel (21) angreift.

5. Laminiervorrichtung nach einem der vorhergehenden Ansprüche, **dadurch gekennzeichnet, dass** die Heizeinrichtung (31) und die Kühleinrichtung (32) als eine verfahrbare Einheit ausgebildet sind, die thermisch zueinander entkoppelt sind.

6. Laminiervorrichtung nach Anspruch 2, **dadurch gekennzeichnet, dass** die Führungseinrichtung (37) zur verfahrbaren Aufnahme der Heizeinrichtung (31) und der Kühleinrichtung (32) an dem Grundkörper (16) mit einer Federlagerung (38) befestigt ist.

7. Laminiervorrichtung nach einem der vorhergehenden Ansprüche, **dadurch gekennzeichnet, dass** der Niederhalter (24) ein Laminierblech (36) vorzugsweise austauschbar aufnimmt oder dass dessen zum Stapel (14) weisende Seite als Laminierblech (36) ausgebildet ist.

8. Laminiervorrichtung nach einem der vorhergehenden Ansprüche, **dadurch gekennzeichnet, dass** der Stapel (14) von Substratschichten (12) auf einem Werkstückträger (45) angeordnet ist, der von einer Transportvorrichtung in den Grundkörper (16) überführbar ist und nach dem Laminieren wieder zurückführbar ist.

9. Laminiervorrichtung nach einem der vorhergehenden Ansprüche, **dadurch gekennzeichnet, dass** der Grundkörper (16) einen C-förmigen Maschinenrahmen (17) aufweist, welcher in einem oberen Bereich einen Querträger (18) zur Aufnahme des beweglichen Stempels (21) aufweist und in einem unteren Bereich den Pressentisch (19) aufnimmt.

10. Laminiervorrichtung nach einem der vorhergehenden Ansprüche, **dadurch gekennzeichnet, dass** seitlich zum Grundkörper (16) der Niederhalter (24) positioniert ist, der mit einer Verfahreinrichtung (25) aus einer Freigabeposition in eine Halteposition zur Fixierung des Stapels (14) zum Pressentisch (19) überführbar ist.

11. Verfahren zum Laminieren eines aus mehreren Substratschichten (12) bestehenden Stapels (14) zu einem Verbundkörper
- bei dem ein Stapel (14) aus mehreren Substratschichten (12) in eine Laminiervorrichtung (11), insbesondere einer Laminiervorrichtung nach einem der Ansprüche 1 bis 10, zum Laminieren auf einem Pressentisch (19) in einer Laminierposition positioniert wird,
- bei dem ein Niederhalter (24) in eine Halteposition übergeführt und der Stapel (14) zum Pressentisch fixiert wird,
- bei dem zum Aufheizen und Laminieren des Stapels (14) eine Heizeinrichtung (31) zum Niederhalter (24) verfahren wird,
- bei dem zumindest ein beweglicher Stempel (21) während einer Heizphase die Heizeinrichtung (31) auf den Niederhalter (24) drückt und eine Wärme- und Druckübertragung in den Stapel (14) eingeleitet wird,
- bei dem nach dem Laminieren des Stapels (14) der zumindest eine bewegliche Stempel (21) nach oben bewegt und die Heizeinrichtung (31) gegenüber dem Niederhalter (24) abgehoben und in eine Ruheposition (34) verfahren wird,
- bei dem nach dem Überführen der Heizeinrichtung (31) aus einer Arbeitsposition (35) in die Ruheposition (34) der Stapel (14) durch den Niederhalter (24) fixiert gehalten bleibt,
- bei dem die Kühleinrichtung (32) in die Arbeitsposition (35) übergeführt wird,
- bei dem durch den beweglichen Stempel (21) die Kühleinrichtung (32) während der Kühlphase auf den Niederhalter (24) gedrückt wird und bei dem nach der Kühlphase die Kühleinrichtung (32) aus der Arbeitsposition (35) in die Ruheposition (34) verfahren wird und
- bei dem der Niederhalter (24) in eine Freigabeposition übergeführt wird und der Verbundkörper aus der Laminierposition herausgeführt wird.

12. Verfahren nach Anspruch 11, **dadurch gekennzeichnet, dass** die Heizeinrichtung (31) und Kühleinrichtung (32) beim Betrieb der Laminiervorrichtung (11) in der Ruheposition (34) und der Arbeitsposition (35) jeweils mit einer Arbeitstemperatur betrieben werden.

13. Verfahren nach einem der Ansprüche 11 oder 12, **dadurch gekennzeichnet, dass** der Stapel (14) mit einer voreingestellten Kraft durch den Niederhalter (24) fixiert gehalten wird.

14. Verfahren nach einem der vorhergehenden Ansprüche 11 bis 13, **dadurch gekennzeichnet, dass** während der Lamination des Stapels (14) die Temperatur mit einem Temperatursensor, die Höhe des Stapels (14) mit einem Abstandssensor, die Druckkraft auf den Stapel (14) mit einem Kraftsensor und/oder die Laminations- und Kühldauer mit einem Zeitmesser überwacht wird.

## Claims

1. A laminating device for laminating a stack (14) consisting of a plurality of substrate layers (12) to form a composite body, in particular a document body, said device having a main body (16) on which at least one movable punch (21) is provided and at least one lamination plate (36) which is disposed between said stack (14) and said at least one movable punch (21), and a press table (19) on which the stack (14) is disposable in a lamination position for creating said composite body, **characterised in that**
- the stack (14) is fixable disposed in a lamination position with respect to the press table (19) by means of a holding-down device (24) and
- a heating device (31) and a cooling device (32) is successively positionable with respect to the holding-down device (24) while the latter is fixedly disposed in the lamination position.

2. The laminating device as claimed in claim 1, **characterised in that** the main body (16) has a guide mechanism (37) provided thereon by means of which the heating device (31) and the cooling device (32) is alternately transferable from a position of rest (34) to a working position (35) with respect to said holding-down device (24).

3. The laminating device as claimed in any of the preceding claims, **characterised in that** the heating device (31) and the cooling device (32) are provided with a support surface (33) that is transferable to a working position (35) in which it is applied to said holding-down device (24).

4. The laminating device as claimed in any of the preceding claims, **characterised in that** the heating device (31) and the cooling device (32) are each provided with a pressure surface (23) which is oriented in a direction facing the movable punch (21) and upon which said at least one movable punch (21) acts.

5. The laminating device as claimed in any of the preceding claims, **characterised in that** the heating device (31) and the cooling device (32) are each realised in the form of a displaceable unit and are thermally decoupled from each other.

6. The laminating device as claimed in claim 2, **characterised in that** the guide mechanism (37) for displaceably receiving the heating device (31) and the cooling device (32) are fastened to the main body (16) by means of a spring mounting (38).

7. The laminating device as claimed in any of the preceding claims, **characterised in that** the holding-down device (24) receives a lamination plate (36), which is preferably exchangeable, or **in that** its surface facing the stack (14) is in itself realised as a lamination plate (36).

8. The laminating device as claimed in any of the preceding claims, **characterised in that** the stack (14) of substrate layers (12) is disposed on a workpiece support (45) which is transferable to, and placed into, the main body (16) by a transporting apparatus and is movable back again once the laminating process has been accomplished.

9. The laminating device as claimed in any of the preceding claims, **characterised in that** the main body (16) has a C-shaped machine frame (17) which has a cross member (18) formed in an upper part thereof for accommodating said movable punch (21) and which accommodates the press table (19) in a lower part.

10. The laminating device as claimed in any of the preceding claims, **characterised in that** the holding-down device (24) is positioned laterally with respect to the main body (16) and is transferable, using a displacement device (25), between a release position and a holding position for fixedly holding the stack (14) with respect to the press table (19).

11. A method for laminating a stack (14) consisting of a plurality of substrate layers (12) to form a composite body,
- wherein a stack (14) consisting of a plurality of substrate layers (12) is positioned in a lamination position on a press table (19) so as to be laminated in a laminating device (11), in particular a laminating device as claimed in any one of claims 1 to 10,
- wherein a holding-down device (24) is transferred to a holding position and the stack (14) is fixedly positioned with respect to the press table,
- wherein for heating and laminating the stack (14), a heating device (31) is moved towards the holding-down device (24),
- wherein at least one movable punch (21) presses the heating device (31) onto the holding-down device (24) during a heating stage in the course of which heat and pressure are conveyed to the stack (14),
- wherein once the lamination of the stack (14) has been accomplished, the at least one movable punch (21) is moved upwardly and the heating device (31) is lifted with respect to the holding-down device (24) and is moved to a position of rest (34),
- wherein once the heating device (31) has been transferred from a working position (35) to the position of rest (34), the stack (14) continues to be fixedly held in position by the holding-down device (24),
- wherein the cooling device (32) is transferred to the working position (35),
- wherein the cooling device (21) is pressed onto the holding-down device (24) by the movable punch (32) during the cooling stage and wherein, once the cooling stage has been accomplished, the cooling device (32) is moved from the working position (35) to the position of rest (34), and
- wherein the holding-down device (24) is transferred to a release position and the composite body is removed from the lamination position.

12. The method as claimed in claim 11, **characterised in that** during the operation of the laminating device (11), the heating device (31) and the cooling device (32) are each operated in their respective positions of rest (34) and working positions (35) at a uniform working temperature.

13. The method as claimed in any one of claims 11 or 12, **characterised in that** a predefined force is exerted for the stack (14) to be fixedly held in position by the holding-down device (24).

14. he method as claimed in any one of the preceding claims 11 to 13, **characterised in that** during the laminating of the stack (14) the temperature is monitored using a temperature sensor, the height of the stack (14) is monitored using a distance sensor, the compressive force exerted on the stack (14) is monitored using a force sensor, and/or the lamination time and the cooling time are monitored using a chronometer.

## Revendications

1. Dispositif de stratification destiné à stratifier une pile (14) constituée de plusieurs couches de substrat (12) pour former un corps composite, en particulier un corps de document, pourvu d'un corps de base (16) sur lequel est prévu au moins un poinçon mobile (21) et pourvu d'au moins une tôle de stratification (36) qui est disposée entre la pile (14) et ledit au moins un poinçon mobile (21) et pourvu d'une table de presse (19) sur laquelle peut être disposée la pile (14) dans une position de stratification en vue de former le corps composite, **caractérisé en ce que**
- la pile (14) peut être fixée dans la position de stratification par rapport à la table de presse (19) grâce à un abaisseur (24) et
- un dispositif de chauffage (31) et un dispositif de refroidissement (32) peuvent être positionnés de manière successive par rapport à l'abaisseur (24) fixé dans la position de stratification.

2. Dispositif de stratification selon la revendication 1, **caractérisé en ce que** sur le corps de base (16) est prévu un dispositif de guidage (37) grâce auquel le dispositif de chauffage (31) et le dispositif de refroidissement (32) peuvent passer respectivement d'une position de repos (34) à une position de travail (35) par rapport à l'abaisseur (24).

3. Dispositif de stratification selon l'une quelconque des revendications précédentes, **caractérisé en ce que** le dispositif de chauffage (31) et le dispositif de refroidissement (32) présentent une surface d'appui (33) qui, dans une position de travail (35), peut venir prendre appui contre l'abaisseur (24).

4. Dispositif de stratification selon l'une quelconque des revendications précédentes, **caractérisé en ce que** le dispositif de chauffage (31) et le dispositif de refroidissement (32) présentent respectivement une surface de pression (23) orientée en direction du poinçon mobile (21) contre laquelle vient s'appliquer ledit au moins un poinçon mobile (21).

5. Dispositif de stratification selon l'une quelconque des revendications précédentes, **caractérisé en ce que** le dispositif de chauffage (31) et le dispositif de refroidissement (32) sont réalisés sous la forme d'une unité mobile dont les dispositifs sont découplés thermiquement entre eux.

6. Dispositif de stratification selon la revendication 2, **caractérisé en ce que** le dispositif de guidage (37) est fixé au corps de base (16) grâce à une suspension à ressort (38) en vue de recevoir de manière déplaçable le dispositif de chauffage (31) et le dispositif de refroidissement (32).

7. Dispositif de stratification selon l'une quelconque des revendications précédentes, **caractérisé en ce que** l'abaisseur (24) reçoit, de préférence de manière échangeable, une tôle de stratification (36) ou que sa face tournée vers la pile (14) est réalisée en tant que tôle de stratification (36).

8. Dispositif de stratification selon l'une quelconque des revendications précédentes, **caractérisé en ce que** la pile (14) de couches de substrat (12) est disposée sur un porte-pièce (45) qui peut quitter un dispositif de transport pour passer dans le corps de base (16) et vice versa, une fois le processus de stratification terminé.

9. Dispositif de stratification selon l'une quelconque des revendications précédentes, **caractérisé en ce que** le corps de base (16) présente un bâti de machine (17) en forme de C qui présente, dans une zone supérieure, un support transversal (18) destiné à recevoir le poinçon mobile (21) et, dans une zone inférieure, la table de presse (19).

10. Dispositif de stratification selon l'une quelconque des revendications précédentes, **caractérisé en ce que** l'abaisseur (24) est positionné de manière latérale par rapport au corps de base (16) et peut passer, grâce à un dispositif de déplacement (25), d'une position de libération à une position de maintien en vue de fixer la pile (14) par rapport à la table de presse (19).

11. Procédé destiné à stratifier une pile (14) constituée de plusieurs couches de substrat (12) pour former un corps composite,
- lors duquel une pile (14) de plusieurs couches de substrat (12) est positionnée, dans une position de stratification, dans un dispositif de stratification (11), en particulier un dispositif de stratification selon l'une quelconque des revendications 1 à 10, en vue être stratifiée sur une table de presse (19),
- lors duquel un abaisseur (24) est mis dans une position de maintien et la pile (14) est fixée par rapport à la table de presse,
- lors duquel un dispositif de chauffage (31) est déplacé vers l'abaisseur (24) en vue de chauffer et de stratifier la pile (14),
- lors duquel au moins un poinçon mobile (21) appuie sur l'abaisseur (24) pendant une phase de chauffage du dispositif de chauffage (31), et de la chaleur et de la pression sont transmises dans la pile (14),
- lors duquel, après la stratification de la pile (14), ledit au moins un poinçon mobile (21) est déplacé vers le haut et le dispositif de chauffage (31) est soulevé par rapport à l'abaisseur (24) et est mis dans une position de repos (34),
- lors duquel, après que le dispositif de chauffage (31) est passé d'une position de travail (35) à la position de repos (34), la pile (14) reste maintenue fixée par l'abaisseur (24),
- lors duquel le dispositif de refroidissement (32) est mis dans la position de travail (35),
- lors duquel, lors de la phase de refroidissement, le dispositif de refroidissement (32) est pressé sur l'abaisseur (24) par le poinçon mobile (21) et lors duquel, après la phase de refroidissement, le dispositif de refroidissement (32) passe de la position de travail (35) à la position de repos (34) et
- lors duquel l'abaisseur (24) est mis dans une position de libération et le corps composite est sorti de la position de stratification.

12. Procédé selon la revendication 11, **caractérisé en ce que**, lors du fonctionnement du dispositif de stratification (11), le dispositif de chauffage (31) et le dispositif de refroidissement (32) fonctionnent avec leur température de travail respective, et ce tant dans la position de repos (34) que dans la position de travail (35).

13. Procédé selon l'une quelconque des revendications 11 ou 12, **caractérisé en ce que** la pile (14) est maintenue fixée par l'abaisseur (24) avec une force préréglée.

14. Procédé selon l'une quelconque des revendications 11 à 13, **caractérisé en ce que**, pendant la stratification de la pile (14), la température est surveillée par un capteur de température, la hauteur de la pile (14) est surveillée par un capteur de distance, la force de pression exercée sur la pile (14) est surveillée par un capteur de force et/ou la durée de stratification et la durée de refroidissement sont surveillées par un chronomètre.
